# EUROPEAN PATENT APPLICATION

(11) **EP 4 160 502 A1**
(43) Date of publication of application: **05.04.2023**
(21) Application number: 22196525.4
(22) Date of filing: 20.09.2022
(51) Int. Cl.: G06Q 20/32, G06Q 20/12, G06Q 20/34, G06Q 20/40, G06Q 20/38

(54) **USER AUTHENITICATION SYSTEM USING PHYSICAL CARD, AND METHOD THEREOF**

(30) Priority: 29.09.2021 KR 20210128699
(71) Applicant: Kona I Co., Ltd., Seoul 07237 (KR)
(72) Inventor: SIM, Dae Beom, 02054 Seoul (KR); KI, Su Young, 07510 Seoul (KR)
(74) Representative: Vossius & Partner Patentanwälte Rechtsanwälte mbB

(57) **Abstract**

The present invention relates to a user authentication system using a physical card and a method thereof, and the user authentication system for providing online user authentication service using a physical card through connection of a user terminal and the physical card includes: a card transaction unit for performing a card transaction between the user terminal and the physical card, and transmitting a result value according to the card transaction to a transaction permission request unit, when the user terminal and the physical card are tagged with each other; the transaction permission request unit for transmitting a card transaction permission request including the result value according to the card transaction to a transaction permission server; and a user authentication confirmation unit for determining that the online user authentication is completed, when a transaction permission result generated according to validation of the result value according to the card transaction is received from the transaction permission server, and the transaction permission result verifies that the card transaction between the user terminal and the physical card is covalid.

## Description

### BACKGROUND OF THE INVENTION

### Field of the Invention

The present invention relates to a user authentication system using a physical card and a method thereof, more specifically, to a user authentication system using a physical card and a method thereof, which provide user authentication service by performing a card transaction between the physical card and a user terminal and receiving transaction authentication from a card company.

### Background of the Related Art

In order for an online service user to be provided with online services such as Internet site membership registration, online financial transaction, online public services, and the like, identity of the user should be confirmed, and existing user authentication (or identity authentication) proves identity of a user by issuing an accredited certificate, joint certificate, or i-PIN, or using mobile phone identity authentication.

However, it is inconvenient in that a user should obtain his or her own accredited certificate or joint certificate and store the certificate in a mobile terminal to be provided with online services, and when the validity period of the certificate expires or the cellular phone is lost, the accredited certificate or joint certificate should be reissued, and the procedure of the mobile phone identity authentication is troublesome since a confirmation process should be performed through a short message service (SMS), call confirmation, or a separate application after inputting personal information. In addition, when a user's mobile terminal is hacked by a program embedded with a malicious code, there is a security problem in that a previously stored accredited certificate or joint certificate may be copied and leaked.

### SUMMARY OF THE INVENTION

An object of the present invention is to provide a user authentication system using a physical card and a method thereof, which conveniently provide online user authentication service without storing a medium for online user authentication in a mobile terminal without a separate additional procedure.

The technical problems of the present invention are not limited to the technical problems mentioned above, and unmentioned other technical problems will be clearly understood by those skilled in the art from the following description.

According to an embodiment of the present invention, there is provided a user authentication system for providing online user authentication service using a physical card through connection of a user terminal and the physical card, the system comprising: a card transaction unit for performing a card transaction between the user terminal and the physical card, and transmitting a result value according to the card transaction to a transaction permission request unit, when the user terminal and the physical card are tagged with each other; the transaction permission request unit for transmitting a card transaction permission request including the result value according to the card transaction to a transaction permission server; and a user authentication confirmation unit for determining that the online user authentication is completed, when a transaction permission result generated according to validation of the result value according to the card transaction is received from the transaction permission server, and the transaction permission result verifies that the card transaction between the user terminal and the physical card is valid.

The result value according to the card transaction is data that can be verified by the transaction permission server, and may include a special authentication value that varies in each card transaction between the user terminal and the physical card.

The special authentication value may be data encrypted with a key generated using a key previously issued and stored in the physical card and valid only for the card transaction.

The card transaction permission request includes holder authentication data, wherein the holder authentication data is data received from the user terminal or a holder confirmation unit and may include a result value according to a PIN number verification transaction.

The user authentication system may further comprise a user authentication request reception unit for monitoring in real time whether an online user authentication request is generated from the service server, and the user authentication request reception unit may request the card transaction unit to perform a card transaction when the online user authentication request is generated and/or when the user terminal and the physical card are tagged with each other.

The user authentication confirmation unit may provide a user authentication result to the user terminal and/or the service server.

According to another embodiment of the present invention, there is provided a user authentication method using a physical card, the method comprising the steps of: performing a card transaction between a user terminal and the physical card, by a card transaction unit; transmitting a result value according to the card transaction to a transaction permission request unit, by the card transaction unit; transmitting a card transaction permission request including a result value according to the card transaction to a transaction permission server, by the transaction permission request unit; receiving a transaction permission result generated according to validation of the result value according to the card transaction from the transaction permission server; and determining that an online user authentication is completed, when the transaction permission result verifies that the card transaction between the user terminal and the physical card is valid.

The result value according to the card transaction is data that can be verified by the transaction permission server, and may include a special authentication value that varies in each card transaction between the user terminal and the physical card.

The special authentication value may be data encrypted with a key generated using a key previously issued and stored in the physical card and valid only for the card transaction.

The transaction permission server may verify validity of the card transaction by decrypting the encrypted data using the previously issued and stored key.

The user authentication method may further comprise the step of performing holder authentication including a PIN number verification transaction, and transmitting holder authentication data to the transaction permission server.

The user authentication method may further comprise the step of monitoring in real time whether an online user authentication request is generated from the service server.

The user authentication method may further comprise the step of providing a user authentication result to the user terminal and/or the service server.

The step of performing a card transaction between the user terminal and the physical card may be completed before the step of transmitting a result value according to the card transaction to the transaction permission request unit is performed.

The step of performing a card transaction between the user terminal and the physical card may be completed after the step of receiving the transaction permission result from the transaction permission server.

Details of other embodiments are included in the detailed description and drawings.

According to the user authentication system using a physical card and a method thereof according to the embodiments, as user authentication service is provided through a credit card transaction and authentication thereof without storing a medium for online user authentication in a terminal without a separate additional procedure, it can be advantageous in providing user convenience by simplifying the online user authentication process of the user and enhancing security of the user authentication process.

The effects of the present invention are not limited to the effects mentioned above, and unmentioned other effects will be clearly understood by those skilled in the art from the following description.

### BRIEF DESCRIPTION OF THE DRAWINGS

FIG. 1 is a view schematically showing a user authentication system using a physical card according to an embodiment of the present invention.
FIG. 2 is a block diagram schematically showing the configuration of a physical card according to an embodiment of the present invention.
FIG. 3 is a block diagram schematically showing the configuration of a user terminal according to an embodiment of the present invention.
FIG. 4 is a block diagram schematically showing the configuration of a card company server according to an embodiment of the present invention.
FIG. 5 is a block diagram schematically showing the configuration of a user authentication server according to an embodiment of the present invention.
FIG. 6 is a sequence diagram illustrating a user authentication method using a physical card according to an embodiment of the present invention.
FIG. 7 is a sequence diagram illustrating a user authentication method using a physical card according to another embodiment of the present invention.
FIG. 8 is a flowchart illustrating a card transaction process according to an embodiment of the present invention.

### DETAILED DESCRIPTION OF THE PREFERRED EMBODIMENT

Hereinafter, preferred embodiments of the present invention will be described in detail with reference to the accompanying drawings in order to clarify the technical spirit of the present invention. In describing the present invention, when it is determined that detailed description of a related well-known function or component may unnecessarily obscure the gist of the present invention, the detailed description will be omitted. Components having substantially the same functional configuration in the drawings are given the same reference numerals and reference symbols as much as possible even though they are shown in different drawings. For convenience of explanation, the device and the method will be described together if necessary.

Hereinafter, the term "unit" is defined herein as having its broadest definition to ordinary skill in the art to refer to software including instructions executable in a non-transitory computer-readable medium that would perform the associated function when executed, a circuit or a processor designed to perform the associated function, hardware designed to perform the associated function, or a combination of them.

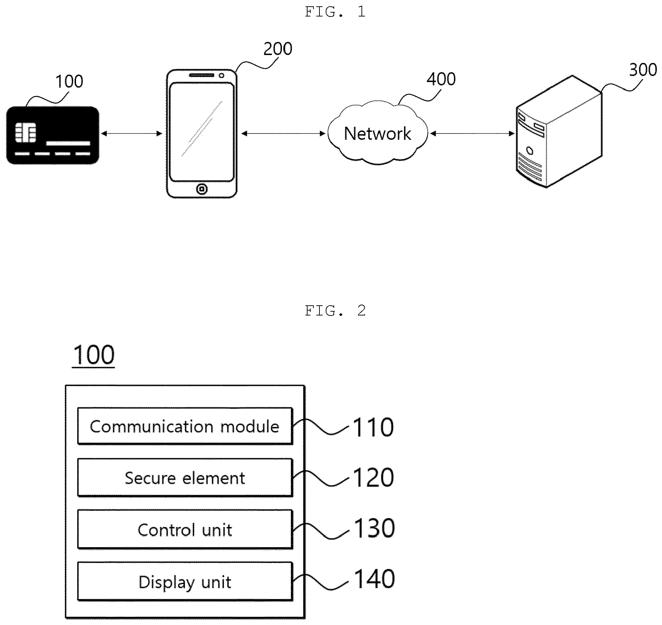

FIG. 1 is a view schematically showing a user authentication system using a physical card according to an embodiment of the present invention.

Referring to FIG. 1, a user authentication system using a physical card according to an embodiment may include a physical card 100, a user terminal 200, a card company server 300, and a network 400.

The physical card 100 may mean various types of cards capable of performing contactless communication with the user terminal 200. The physical card 100 may be implemented in the form of a real card (e.g., in the form of a rectangular plastic card) by mounting a communication function capable of communicating with the user terminal 200 and a payment module for making a payment. For example, the physical card 100 may be a smart card including an integrated circuit (IC) chip and providing a payment function using a short-range wireless communication technique. However, it is not limited thereto, and the physical card 100 may include a combination card that integrates a contact card function and a contactless card function as a smart card embedded with a central processing unit (CPU), a hybrid card as a smart card that combines the functions of a check card and a credit card, a smart card including a storage unit embedded with a plurality of cards and providing payment service using any one of the plurality of cards according to selection of a user.

The user terminal 200 is a smart device possessed by a user, and for example, the user terminal 200 may include a cellular phone, a smart phone, a smart pad, a notebook computer, a digital broadcasting terminal, a personal digital assistant (PDA), a portable multimedia player (PMP), a navigation device, a tablet PC, and various wearable devices such as a smart watch, a smart band, and the like. However, it is not limited thereto, and may include various types of electronic devices capable of performing a communication function such as wireless communication and performing a payment service.

The user terminal 200 may install and drive an application program and/or an application provided by the card company server 300. The user terminal 200 may perform contactless communication and card transaction with the smart card 100 using the application program and/or the application. In addition, the user terminal 200 may exchange data with the card company server 300 through the network 400.

The card company server 300 may issue a financial card for a user, manage information on the issued card, and approve a card transaction by verifying validity of the card transaction when a card transaction permission request is received from the user terminal 200.

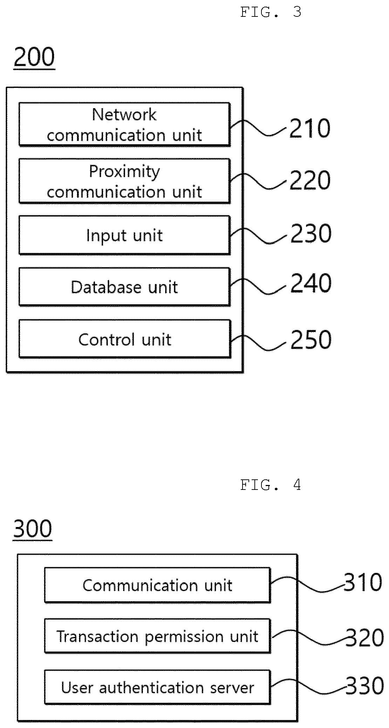

In addition, the card company server 300 may include a user authentication server (330 in FIG. 4) that receives card transaction result data between the physical card 100 and the user terminal 200 and provides online user authentication service for the user according to the card transaction verification result. Although it is exemplified in this specification that the card company server 300 includes the user authentication server 330 as it is mainly described that the card company is a subject that provides online user authentication service, it is not limited thereto. For example, when the subject that provides online user authentication service is a subject different from the card company, the user authentication server is implemented as a separate server different from the card company server 300, and the user authentication server, the card company server 300, and the user terminal 200 may perform a user authentication process using a physical card described below by performing data communication through the network 400.

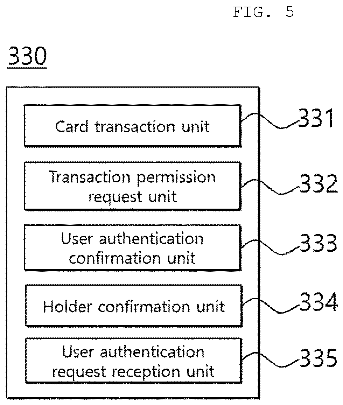

Details the card company server 300 will be described with reference to FIGS. 4 and 5.

The network 400 is a communication network in which the card company server 300 and the user terminal 200 communicate with each other, and may be configured regardless of a communication type. For example, although it may be configured of various communication networks such as a Personal Area Network (PAN), a Local Area Network (LAN), a Metropolitan Area Network (MAN), a Wide Area Network (WAN), and the like, it is not limited thereto.

FIG. 2 is a block diagram schematically showing the configuration of a physical card according to an embodiment of the present invention.

Referring to FIG. 2, the physical card 100 according to an embodiment may include a communication module 110, a secure element 120, and a control unit 130. In addition, in some embodiments, the physical card 100 may further include a display unit 140.

The communication module 110 is a generic term of communication resources capable of wireless communication with a card reader, a user terminal 200, and the like using a radio frequency signal as a communication medium within a predetermined distance (e.g., within 10m), and may transmit and receive data to and from the user terminal 200 through at least one among, for example, Near Field Communication (NFC), Radio Frequency Identification (RFID), Bluetooth, Magnetic Secure Transmission (MST), and Wireless Magnetic Communication (WMC). In another embodiment, the communication module 110 may further include a data transmission and reception function through Magnetic Secure Transmission (MST).

In addition, although the communication module 110 may perform offline short-range wireless communication with the user terminal 200, it is not limited thereto, and the communication module 110 may include an online communication function performed through the network 400.

The secure element (SE) 120 may include a universal integrated circuit card (UICC), an embedded SE (eSE), and a microSD. The secure element 120 may be implemented as an IC chip and perform IC transactions. Here, although the IC transaction may mean a card transaction according to the EMV standard, i.e., an international standard for credit and debit transactions, it is not limited thereto.

The secure element 120 may store card information related to a payment means and a plurality of application programs associated therewith. Here, the card information may include at least one among PAN, CCV, CVC, and validity period.

The control unit 130 may control the overall operation of each component of the physical card 100. Although the control unit 130 may include a microcontroller unit (MCU) in the form of a printed circuit or a chip interposed between an upper cover sheet and a lower cover sheet forming the physical card 100, it is not limited thereto. In another embodiment, the control unit 130 may be formed to be integrated with the secure element 120.

The display unit 140 is a unit for displaying card information or operating state information of a physical card, and includes components that can visually display information, such as a black and white or color liquid crystal display (LCD), a light emitting display (LED), an electronic paper display (EPD), or the like. Here, although the operating state information of the physical card may be information for identifying whether a card transaction between the physical card 100 and the user terminal 200 is a card transaction for actual payment or a card transaction for online user authentication, it is not limited thereto.

FIG. 3 is a block diagram schematically showing the configuration of a user terminal according to an embodiment of the present invention.

Referring to FIG. 3, the user terminal 200 according to an embodiment may include a network communication unit 210, a proximity communication unit 220, an input unit 230, a database unit 240, and a control unit 250. The configuration of the user terminal 200 may include configurations known to those skilled in the art (e.g., a display unit, a camera, a battery unit, and the like), and since the configurations are apparent, detailed description thereof will be omitted.

The network communication unit 210 may perform data communication with the card company server 300 by wire or wirelessly. The network communication unit 210 may transmit and receive data between the card company server 300 and the user terminal 200 through a wired Internet communication method that supports Transmission Control Protocol/Internet Protocol (TCP/IP), or the like, or at least one of various wireless communication methods such as Wideband Code Division Multiple Access (WCMDA), Long Term Evolution (LTE), Wireless Broadband Internet (WiBro), Wireless Fidelity (Wi-Fi), and the like.

The proximity communication unit 220 may perform data communication with the physical card 100 through short-range wireless communication. The proximity communication unit 220 may transmit and receive data or perform card transactions between the physical card 100 and the user terminal 200 through at least one of wireless communication methods such as NFC, RFID, Bluetooth, MST, WMC, and the like.

The input unit 230 may include a plurality of keys capable of inputting a PIN number, a password, a CVC, and the like that can be used as authentication identification information of the physical card 100. The input unit 230 may include at least one among a keypad that includes a plurality of keys and outputs a signal corresponding to a pressed key, and a touch screen that displays a soft keypad corresponding to the keypad on the screen, and generates key data in response to a key at a touched position on the screen.

The database unit 240 may store data transmitted from the physical card 100, information related to the physical card, and an application program and/or an application provided by the user authentication server (330 in FIG. 4). Here, the information related to the physical card may include a PIN number, a password, a CVC, and the like of the physical card 100.

The database unit 240 may encrypt and store information related to the physical card input by the input unit 230 and data transmitted from the physical card 100, or receive data encrypted by the physical card 100 and store the data in an encrypted state.

In addition, the database unit 240 may store details of card transactions between the user terminal 200 and the physical card 100. When the database unit 240 stores details of card transactions, personal information may be prevented from being exposed since only transaction identification information such as the date, time, and type of transactions, excluding personal information, result values of the card transactions, and the like, are stored. However, it is not limited thereto, and data that requires security, such as personal information and card transaction result values, may be encrypted and stored.

The control unit 250 may control the overall operation of each component of the user terminal 200. The control unit 250 may request the card transaction unit to perform a card transaction (331 in FIG. 5). Here, the card transaction unit 331 may be provided as an application program or an application from the user authentication server 330 and stored in the user terminal 200. When the user terminal 200 and the physical card 100 approach, contact, or are tagged with each other, and/or when an online user authentication request is generated from a service server (not shown), the control unit 250 may request the card transaction unit 331 to perform a card transaction.

The control unit 250 may monitor in real time whether an online user authentication request is generated from a service server (not shown). In this specification, the service server is a server that provides online service, and may include various servers such as an online shopping mall server, a financial company server, a public institution server, and a server of a company that provides online payment service.

When an online user authentication request is generated, the control unit 250 may request the user to contact the physical card 100 for user authentication through a notification pop-up or the like. In addition, when an online user authentication request is generated, the control unit 250 may execute an application program or an application provided by the user authentication server (330 in FIG. 4).

In some embodiments, when the user terminal 200 and the physical card 100 approach, contact, or are tagged with each other, the control unit 250 may execute an application program or an application provided by the user authentication server 330 or provide a user with a message asking whether or not to perform a user authentication process through a notification pop-up or the like. In addition, the control unit 250 may request the user to select whether the card transaction between the user terminal 200 and the physical card 100 is a card transaction for making a payment or a card transaction for online user authentication.

In addition, the control unit 250 may receive a user authentication result from the user authentication server 330 and transmit the received user authentication result to the service server.

The control unit 250 may perform a PIN number verification transaction in the user authentication process. The PIN number verification transaction is a process of authenticating that a user is the holder of the physical card based on selection of the user, and it may mean a process of requesting the user to input the PIN number of the physical card 100 used for user authentication, and verifying whether the PIN number input through the input unit 230 matches the PIN number of the physical card 100 stored in advance. The control unit 250 may generate a result value according to the PIN number verification transaction, and provide the result value to the user authentication server (330 in FIG. 4). In some embodiments, the control unit 250 may provide the result value according to the PIN number verification transaction to a transaction permission server (320 in FIG. 4).

Although FIG. 3 shows that real-time monitoring of whether an online user authentication request is generated from the service server, a request for contacting the physical card 100, a transaction of PIN number verification, and the like are performed by the control unit 250, it is not limited thereto, and it may be performed through the user authentication server 330. For example, the functions provided by the control unit 250 described above may be performed through an application program or an application provided by the user authentication server 330.

FIG. 4 is a block diagram schematically showing the configuration of a card company server according to an embodiment of the present invention.

Referring to FIG. 4, the card company server 300 may include a communication unit 310, a transaction permission server 320, and a user authentication server 330.

The communication unit 310 may perform data communication with the user terminal 200 by wire or wirelessly through the network 400. Since the communication method of the communication unit 310 may be substantially the same as the communication method of the network communication unit 210, detailed description thereof will be omitted.

The transaction permission server 320 may receive a card transaction permission request including a result value according to a card transaction between the user terminal 200 and the physical card 100 from a user authentication server 330and verify whether the card transaction is valid by confirming validity of the result value. The transaction permission server 320 may transmit a transaction permission result to the user authentication server 330after verifying validity of the card transaction.

The result value according to the card transaction between the user terminal 200 and the physical card 100 may include card information and special authentication value (or special authentication data) acquired in the card transaction process. In addition, the result value according to the card transaction may include online data authentication (ODA) and various personalized card issuance data according to card transaction conditions. Here, the special authentication value is data that can be verified by the card company among the result values of the card transaction, and varies in each card transaction, and the special authentication value may be data encrypted with a key that is generated using a key previously issued and stored in the physical card 100 and valid only for the transaction (e.g., card master key, authentication key, encryption key, application encryption master key, or the like).

For example, the special authentication value may include an Authorization Request Cryptogram (ARQC). However, it is not limited thereto. ARQC is a cryptogram that a card company supporting the card transaction according to the EMV standard receives from the card to verify validity of a card transaction, and may include data such as a transaction amount, a transaction number, a random number generated for each transaction, and the like. The detailed configuration method, calculation method, and encryption method of ARQC data may be determined according to the specifications of a brand company (VISA, Master Card, UNION PAY, or the like).

Accordingly, the transaction permission server 320 may verify validity of the transaction by decrypting the encrypted data using the previously issued and stored key of the physical card 100.

In addition, the transaction permission server 320 may receive a result value according to holder authentication from the user terminal 200 or the user authentication server 330, and confirm that the holder of the user terminal 200 and the physical card 100 used for the card transaction is a user.

As described, the user authentication system using a physical card according to an embodiment includes a card transaction verification process through the transaction permission server 320 of the card company server 300 in performing online user authentication, and since data to be verified varies in each card transaction and is encrypted with a key that is valid only for the transaction in the card transaction verification process, and only the card company server 300 that knows the previously issued and stored key of the physical card 100 may decrypt and verify the encrypted data, a card transaction result value that has already been used cannot be reused in the future, and therefore, stability and security of the online user authentication process may be enhanced.

In addition, since sensitive information such as personal information is not exposed during a card transaction, it may be advantageous in reducing the risk of leakage of personal information.

The user authentication server 330 may receive a result value of card transaction between the user terminal 200 and the physical card 100, request card transaction permission from the transaction permission server 320, and provide that user authentication has been completed to the user terminal 200 and/or a service server (not shown) when a transaction permission result is received from the transaction permission server 320. The user authentication server 330 may provide the user terminal 200 with an application program and/or an application including a short-range wireless communication and card transaction processing function with the physical card 100.

FIG. 5 is a block diagram schematically showing the configuration of a user authentication server according to an embodiment of the present invention.

Referring to FIG. 5, the user authentication server 330 according to an embodiment may include a card transaction unit 331, a transaction permission request unit 332, and a user authentication confirmation unit 333. In addition, in some embodiments, the user authentication server 330 may further include a holder confirmation unit 334 and/or a user authentication request reception unit 335.

The card transaction unit 331 may perform card transactions between the user terminal 200 and the physical card 100. The card transaction unit 331 may perform card transactions through the user terminal 200. Although the card transaction unit 331 may be provided to the user terminal 200 as an application program or an application and perform offline card transactions through short-range wireless communication between the user terminal 200 and the physical card 100, it is not limited thereto. In another embodiment, the card transaction unit 331 may be provided as a cloud-based application to perform online card transactions.

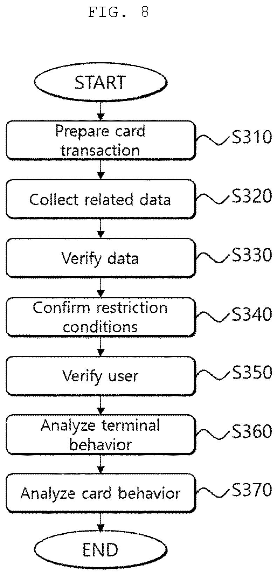

For example, the card transaction unit 331 may perform card transactions according to the EMV standard. Specifically, when the user terminal 200 and the physical card 100 approach, contact, or are tagged with each other, the card transaction unit 331 may perform a card transaction including the processes of preparing a transaction, collecting related data, verifying the data, confirming restriction conditions, verifying the user, analyzing terminal behaviors, analyzing card behaviors, and determining an online or offline transaction. Details the card transaction process of the card transaction unit 331 will be described below with reference to FIG. 8.

The card transaction unit 331 may provide card information and a special authentication value acquired in the card transaction process to the transaction permission request unit 332. For example, the card transaction unit 331 may be provided to the user terminal 200 as an application program or an application to perform a card transaction between the user terminal 200 and the physical card 100, and provide the card information and special authentication value (or special authentication data) acquired in the card transaction process to the transaction permission request unit 332 through the network communication unit 210 of the user terminal 200. However, it is not limited thereto.

The transaction permission request unit 332 may transmit a card transaction permission request including the card information and special authentication value received from the card transaction unit 331 to the transaction permission server 320. The card transaction permission request may include holder authentication data. The holder authentication data may include a result value according to a PIN number verification transaction performed by the control unit 250 of the user terminal 200. In some embodiments, the holder authentication data may include a security release result value of the user terminal 200 itself. Here, the security release result value may be a result value according to authentication (password, locking pattern, biometric recognition authentication such as a fingerprint or an iris) performed for security of the user terminal 200 itself.

The user authentication confirmation unit 333 may receive the transaction permission result from the transaction permission server 320 and determine whether the user is authenticated. When the transaction permission result received from the transaction permission server 320 verifies that the card transaction between the user terminal 200 and the physical card 100 is valid (permitted), the user authentication confirmation unit 333 may determine that the user authentication has been completed. The user authentication confirmation unit 333 may provide the user authentication result to the user terminal 200. In this case, the user terminal 200 may provide the user authentication result to the service server that has requested user authentication. However, it is not limited thereto, and the user authentication confirmation unit 333 may provide the user authentication result to the service server that has requested user authentication through the network 400.

In addition, although the user authentication confirmation unit 333 may provide a notification pop-up or a short message service (SMS) informing the user terminal 200 that user authentication is complete, it is not limited thereto.

The holder confirmation unit 334 may receive a result value according to a PIN number verification transaction from the control unit 250 of the user terminal 200, and transmit the result value to the transaction permission server 320.

In another embodiment, when a PIN number verification transaction is performed through the user authentication server 330, the holder confirmation unit 334 may perform the PIN number verification transaction in the process of user authentication. The holder confirmation unit 334 may perform the PIN number verification transaction before, after, or while the card transaction is performed by the card transaction unit 331. In this case, the holder confirmation unit 334 may transmit a result value (or holder authentication data) of the PIN number verification transaction to the transaction permission server 320.

In addition, the holder confirmation unit 334 may be integrated with the card transaction unit 331 to provide a PIN number verification transaction function.

The user authentication request reception unit 335 may monitor in real time whether an online user authentication request is generated from a service server, together with or separately from the control unit 250 of the user terminal 200. When an online user authentication request is generated, the user authentication request reception unit 335 may request the card transaction unit 331 to perform a card transaction. In addition, when an online user authentication request is generated, the user authentication request reception unit 335 may request the user to contact the physical card 100 for user authentication through the control unit 250.

As described, the user authentication server 330 according to an embodiment may be advantageous in enhancing stability and security of the identity authentication process by providing a convenient authentication means to the user in a simple way such as contact, approach, or tag between the physical card 100 and the user terminal 200 during online user authentication and, at the same time, using the card transaction result as an identity authentication means.

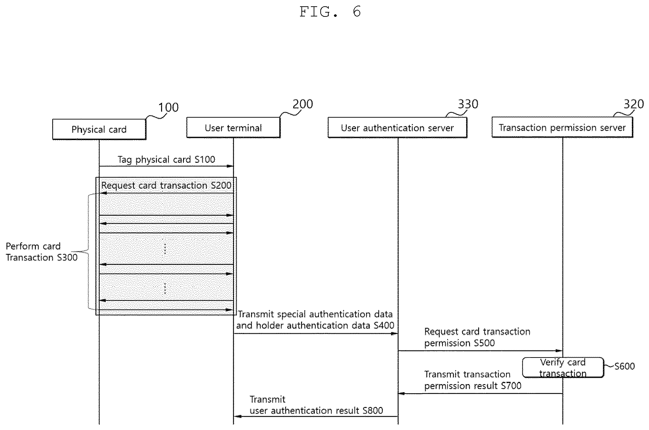

FIG. 6 is a sequence diagram illustrating a user authentication method using a physical card according to an embodiment of the present invention.

Referring to FIGS. 1 to 6, when the user terminal 200 and the physical card 100 approach, contact, or are tagged with each other (S100), the user terminal 200 may request the physical card 100 to perform a card transaction (S200).

In an embodiment, contact, approach, or tag of the user terminal 200 and the physical card 100 may be performed in response to the request of the user terminal 200. For example, when the control unit 250 and/or the user authentication request reception unit 335 receives an online user authentication request from the service server, the control unit 250 may request the user to contact the physical card 100 for user authentication through a notification pop-up or the like. However, it is not limited thereto.

In some embodiments, when the user terminal 200 and the physical card 100 are tagged with each other, the user terminal 200 may provide a message asking the user whether or not to perform the user authentication process through a notification pop-up or the like. In addition, the user terminal 200 may request the user to select whether the card transaction between the user terminal 200 and the physical card 100 is a card transaction for making a payment or a card transaction for online user authentication.

When the user terminal 200 and the physical card 100 are tagged with each other and/or when an online user authentication request is received from the service server, the user terminal 200 may execute the application program or the application provided by the user authentication server 330, and request the physical card 100 to perform a card transaction. Thereafter, a card transaction may be performed between the user terminal 200 and the physical card 100.

The user terminal 200 may perform a card transaction with the physical card 100. For example, the user terminal 200 may perform a card transaction with the physical card 100 through the application program or the application provided by the user authentication server 330. In other words, the card transaction unit 331 of the user authentication server 330 may be provided to the user terminal 200 as an application program or an application and perform offline card transactions through short-range wireless communication between the user terminal 200 and the physical card 100. However, it is not limited thereto. In another embodiment, the card transaction unit 331 may be provided as a cloud-based application to perform an online card transaction.

For example, the card transaction unit 331 may perform a card transaction according to the EMV standard. As a specific example, when the user terminal 200 and the physical card 100 approach, contact, or are tagged with each other, the card transaction unit 331 may perform a card transaction including the processes of preparing a transaction, collecting related data, verifying the data, confirming restriction conditions, verifying the user, analyzing terminal behaviors, analyzing card behaviors, and determining an online or offline transaction. Details of the card transaction process of the card transaction unit 331 will be described below with reference to FIG. 8.

Then, the user terminal 200 may transmit the card information, special authentication data, and holder authentication data acquired in the card transaction process to the user authentication server 330 (S400).

Here, the holder authentication data may be data acquired through holder authentication. A holder authentication function is provided by the user terminal 200, and the holder authentication may include a PIN number verification transaction. The PIN number verification transaction is a process of authenticating that a user is the holder of the physical card based on selection of the user, and it may mean a process of requesting the user to input the PIN number of the physical card 100 used for user authentication, and verifying whether the input PIN number matches the PIN number of the physical card 100 stored in advance.

In some embodiments, the holder authentication includes security authentication of the user terminal 200 itself, and the holder authentication data is a security release result value of the user terminal 200 and may include a result value according to authentication (password, locking pattern, biometric recognition authentication such as a fingerprint or an iris) performed for security of the user terminal 200 itself.

The user terminal 200 may generate a result value (or holder authentication data) according to the PIN number verification transaction, and provide the result value according to the PIN number verification transaction to the user authentication server 330. The user terminal 200 may provide the result value according to the PIN number verification transaction to the transaction permission server 320.

Although FIG. 6 shows that the holder authentication by the user terminal 200 is performed after the card transaction is performed (S300), it is not limited thereto. For example, the holder authentication may be performed before the step of requesting the card transaction (S200). As another example, the holder authentication and the step of performing the card transaction (S300) of the user authentication server 330 may be performed simultaneously.

In addition, although it is shown in FIG. 6 that the holder authentication is performed by the user terminal 200, it is not limited thereto, and the holder authentication may be performed through the user authentication server 330. For example, the PIN number verification transaction may be performed through an application program or an application provided by the user authentication server 330.

Next, the user authentication server 330 may request card transaction permission from the transaction permission server 320 (S500).

The transaction permission request unit 332 may transmit a card transaction permission request including a result value according to the card transaction to the transaction permission server 320. The card transaction permission request may include holder authentication data. The holder authentication data may include a result value according to the PIN number verification transaction. In addition, the holder authentication data may include a result value according to authentication for the security of the user terminal 200 itself.

The result value according to the card transaction may include card information and special authentication value acquired in the card transaction process. In addition, the result value according to the card transaction may include online data authentication (ODA) and various personalized card issuance data according to card transaction conditions. Here, the special authentication value is data that can be verified by the card company among the result values of the card transaction, and varies in each card transaction, and the special authentication value may be data encrypted with a key that is generated using a previously issued and stored key and valid only for the transaction (e.g., card master key, authentication key, encryption key, application encryption master key, or the like).

For example, the special authentication value may include an Authorization Request Cryptogram (ARQC). However, it is not limited thereto. ARQC is a cryptogram that a card company supporting the card transaction according to the EMV standard receives from the card to verify validity of a card transaction, and may include data such as a transaction amount, a transaction number, a random number generated for each transaction, and the like. The detailed configuration method, calculation method, and encryption method of ARQC data may be determined according to the specifications of a brand company (e.g., VISA, Master Card, UNION PAY, or the like).

When the transaction permission server 320 receives a card transaction permission request including a result value according to a card transaction between the user terminal 200 and the physical card 100, it may verify whether the card transaction is valid by confirming validity of the result value of the card transaction (S600).

The transaction permission server 320 may verify validity of the transaction by decrypting the encrypted data using the previously issued and stored key of the physical card 100.

In addition, the transaction permission server 320 may receive a result value according to holder authentication from the user terminal 200 or the user authentication server 330, and confirm that the holder of the user terminal 200 and the physical card 100 used for the card transaction is a user.

The transaction permission server 320 may transmit a transaction permission result to the user authentication server 330 after verifying validity of the card transaction (S700).

The user authentication confirmation unit 333 may receive the transaction permission result from the transaction permission server 320 and determine whether the user is authenticated. When the transaction permission result received from the transaction permission server 320 verifies that the card transaction between the user terminal 200 and the physical card 100 is valid, the user authentication confirmation unit 333 may determine that the user authentication has been completed.

The user authentication confirmation unit 333 may provide the user authentication result to the user terminal 200 (S800). In this case, the user terminal 200 may provide the user authentication result to the service server that has requested user authentication. However, it is not limited thereto, and the user authentication confirmation unit 333 may provide the user authentication result to the service server that has requested user authentication through the network 400.

In some embodiments, although the user authentication confirmation unit 333 may provide a notification pop-up or a short message service (SMS) informing the user terminal 200 that user authentication is complete, it is not limited thereto.

As described, the user authentication method using a physical card according to an embodiment may provide a convenient authentication means to the user in a simple way such as contact, approach, or tag between the physical card 100 and the user terminal 200.

In addition, the user authentication method using a physical card according to an embodiment includes a card transaction verification process through a card company, and since data to be verified varies in each card transaction and is encrypted with a key that is valid only for the transaction in the card transaction verification process, and only the card company server 300 that knows the previously issued and stored key of the physical card 100 may decrypt and verify the encrypted data, a card transaction result value that has already been used cannot be reused in the future, and therefore, stability and security of the online user authentication process may be enhanced. Furthermore, since sensitive information such as personal information is not exposed during a card transaction, it may be advantageous in reducing the risk of leakage of personal information.

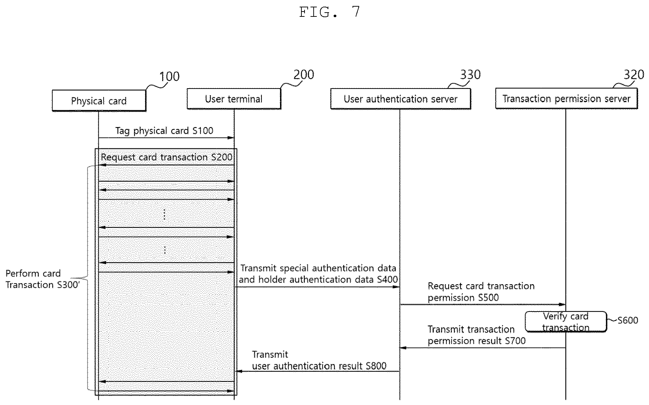

FIG. 7 is a sequence diagram illustrating a user authentication method using a physical card according to another embodiment of the present invention.

The user authentication method using a physical card shown in FIG. 7 may be substantially the same as the embodiment shown in FIG. 6, except that a user authentication process including the steps of transmitting special authentication data and holder authentication data (S400), requesting card transaction permission (S500), verifying card transaction (S600), transmitting a transaction permission result (S700), and transmitting a user authentication result (S800) is performed before the card transaction between the user terminal 200 and the physical card 100 is completed, i.e., while the card transaction between the user terminal 200 and the physical card 100 is in progress.

That is, the procedure and method of FIG. 7 including the steps of transmitting special authentication data and holder authentication data (S400), requesting card transaction permission (S500), verifying card transaction (S600), transmitting a transaction permission result (S700), and transmitting a user authentication result (S800) may be substantially the same as the procedure and method of FIG. 6 including the steps of transmitting special authentication data and holder authentication data (S400), requesting card transaction permission (S500), verifying card transaction (S600), transmitting a transaction permission result (S700), and transmitting a user authentication result (S800). Referring to FIG. 7, when the user terminal 200 and the physical card 100 are tagged with each other (S100), the user terminal 200 may request the physical card 100 to perform a card transaction (S200), and the physical card 100 may perform the card transaction (S300').

In addition, when the user terminal 200 acquires a result value according to the card transaction including the special authentication value while the card transaction between the user terminal 200 and the physical card 100 is performed, a user authentication process including the steps of transmitting special authentication data and holder authentication data (S400), requesting card transaction permission (S500), verifying card transaction (S600), transmitting a transaction permission result (S700), and transmitting a user authentication result (S800) may be performed.

In addition, in the embodiment of FIG. 7, the holder authentication will be performed while the card transaction between the user terminal 200 and the physical card 100 is performed.

As described, the user authentication method using a physical card according to the present invention may be variously modified according to the types of a card transaction between the user terminal 200 and the physical card 100. For example, the user authentication method may transmit a result value according to a card transaction between the user terminal 200 and the physical card 100 to the user authentication server 330 during the card transaction, and receive a transaction permission result and terminate the transaction after the card transaction is verified by the transaction permission server 320, or the user authentication method may transmit a result value according to the card transaction to the transaction permission server 320 as described in FIG. 6 after all card transactions are completed.

FIG. 8 is a flowchart illustrating a card transaction process according to an embodiment of the present invention.

Referring to FIG. 8, first, a card transaction preparation step S310 may include an application selection step and an application initialization step.

Selection of an application means a process of selecting an application that simultaneously supports the physical card 100 and the user terminal 200 for a card transaction, and when an application is selected, the user terminal 200 may receive a processing option data objects list (PDOL) from the physical card 100.

Thereafter, the user terminal 200 may transmit a Get Processing Option (GPO) command including the PDOL to the physical card 100, and the physical card 100 may initialize an IC card transaction according to the GPO command. The physical card 100 may transmit a response message including an application file locator (AFL) to the user terminal 200 after the initialization is completed, and the user terminal 200 may recognize that the physical card 100 is ready to begin a card transaction.

The user terminal 200 may collect related data based on the AFL (S320). Here, the related data are values assigned by the issuer to the physical card 100 when an application is issued and may include a plurality of data used in the transaction.

Then, the user terminal 200 may verify the data and confirm restriction conditions (S330 and S340).

The user terminal 200 may authenticate the physical card 100 using the RSA encryption algorithm. Data verification may include at least one among static data authentication (SDA) and dynamic data authentication (DDA). In addition, the user terminal 200 may confirm restriction conditions of the transaction using the collected related data. For example, the user terminal 200 may confirm whether the validity period of the physical card 100 has elapsed, whether the versions of the applications of the user terminal 200 and the physical card 100 match, validity of the application, and Application Usage Control (AUC) restrictions, and the like.

When the steps of verifying data and confirming restriction conditions are completed, the user terminal 200 may perform user verification (S350). The user verification is a process of verifying that the physical card 100 is a user's card, not a lost or stolen card, and may be performed with reference to a Card Verification Method (CVM) list collected at the step of collecting related data (S320). In addition, the physical card 100 may perform offline PIN verification or offline encrypted PIN verification based on a result of performing the CVM.

Next, the steps of terminal behavior analysis (S360) and card behavior analysis (370) are performed.

The terminal behavior analysis is to compare terminal verification results (TVR) verified by the user terminal 200 with a previously registered Terminal Action Code (TAC) and/or Issuer Action Code (IAC), and the user terminal 200 may determine any one among offline permission, offline rejection, and online processing.

The card behavior analysis may include the steps of receiving, by the physical card 100, a permission or processing method determined by the user terminal 200, and determining whether the physical card 100 completes the transaction online or offline, requests an inquiry, or rejects the transaction. Specifically, the card behavior analysis may include the steps of receiving a generate AC command from the user terminal 200, managing card risk inside the physical card 100, determining a response AC (Application Cryptogram) type of the physical card 100, a procedure according to the AC type (ARQC, AAC, or the like), and the like. Here, when the physical card 100 returns the ARQC in response to the Generate AC command, online processing may be performed.

The card transaction unit 331 may provide the transaction permission request unit 332 with data acquired while performing the card transaction process as a result value according to the card transaction between the user terminal 200 and the physical card 100.

Although the card transaction process according to an embodiment has been described in detail with reference to FIG. 7 for the sake of understanding the present invention, the card transaction process of the card transaction unit 331 is not limited thereto, and the technical spirit is not limited thereto, and some omissions, additions, and modifications may be made without deteriorating the technical spirit of the present invention, and a card transaction process between a smart card and a terminal known to those skilled in the art may be applied.

Although specific terms are used in this specification, they are only used for the purpose of describing the concept of the present invention, and are not used to limit the meaning or the scope of the present invention described in the claims. Each step of the present invention does not need to be necessarily performed in the order described above, and may be performed in parallel, selectively, or individually.

### DESCRIPTION OF SYMBOLS

100: Physical card
200: User terminal
300: Card company server
310: Communication unit
320: Transaction permission server
330: User authentication server
331: Card transaction unit
332: Transaction permission request unit
333: User authentication confirmation unit
334: Holder confirmation unit
335: User authentication request reception unit

## Claims

1. A user authentication system for providing online user authentication service using a physical card through connection of a user terminal and the physical card, the system comprising:
a card transaction unit for performing a card transaction between the user terminal and the physical card, and transmitting a result value according to the card transaction to a transaction permission request unit, when the user terminal and the physical card are tagged with each other;
the transaction permission request unit for transmitting a card transaction permission request including the result value according to the card transaction to a transaction permission server; and
a user authentication confirmation unit for determining that the online user authentication is completed, when a transaction permission result generated according to validation of the result value according to the card transaction is received from the transaction permission server, and the transaction permission result verifies that the card transaction between the user terminal and the physical card is valid.

2. The system according to claim 1, wherein the result value according to the card transaction is data that can be verified by the transaction permission server, and includes a special authentication value that varies in each card transaction between the user terminal and the physical card.

3. The system according to claim 2, wherein the special authentication value is data encrypted with a key generated using a key previously issued and stored in the physical card and valid only for the card transaction.

4. The system according to claim 1, 2, or 3, wherein the card transaction permission request includes holder authentication data, wherein the holder authentication data is data received from the user terminal or a holder confirmation unit and includes a result value according to a PIN number verification transaction.

5. The system according to any one of claims 1 to 4, further comprising a user authentication request reception unit for monitoring in real time whether an online user authentication request is generated from the service server, wherein the user authentication request reception unit requests the card transaction unit to perform a card transaction when the online user authentication request is generated and/or when the user terminal and the physical card are tagged with each other.

6. The system according to claim 5, wherein the user authentication confirmation unit provides a user authentication result to the user terminal and/or the service server.

7. A user authentication method using a physical card, the method comprising the steps of:
performing a card transaction between a user terminal and the physical card, by a card transaction unit;
transmitting a result value according to the card transaction to a transaction permission request unit, by the card transaction unit;
transmitting a card transaction permission request including a result value according to the card transaction to a transaction permission server, by the transaction permission request unit;
receiving a transaction permission result generated according to validation of the result value according to the card transaction from the transaction permission server; and
determining that an online user authentication is completed, when the transaction permission result verifies that the card transaction between the user terminal and the physical card is valid.

8. The method according to claim 7, wherein the result value according to the card transaction is data that can be verified by the transaction permission server, and includes a special authentication value that varies in each card transaction between the user terminal and the physical card.

9. The method according to claim 8, wherein the special authentication value is data encrypted with a key generated using a key previously issued and stored in the physical card and valid only for the card transaction.

10. The method according to claim 9, wherein the transaction permission server verifies validity of the card transaction by decrypting the encrypted data using the previously issued and stored key.

11. The method according to any one of claims 7 to 10, further comprising the step of performing holder authentication including a PIN number verification transaction, and transmitting holder authentication data to the transaction permission server.

12. The method according to any one of claims 7 to 11, further comprising the step of monitoring in real time whether an online user authentication request is generated from the service server.

13. The method according to claim 12, further comprising the step of providing a user authentication result to the user terminal and/or the service server.

14. The method according to any one of claims 7 to 13, wherein the step of performing a card transaction between the user terminal and the physical card is completed before the step of transmitting a result value according to the card transaction to the transaction permission request unit is performed.

15. The method according to any one of claims 7 to 14, wherein the step of performing a card transaction between the user terminal and the physical card is completed after the step of receiving the transaction permission result from the transaction permission server.
